# EUROPEAN PATENT APPLICATION

(11) **EP 4 152 182 A1**
(43) Date of publication of application: **22.03.2023**
(21) Application number: 20935154.3
(22) Date of filing: 13.05.2020
(51) Int. Cl.: G06F 21/32, G06T 7/00

(54) **AUTHENTICATION METHOD, AUTHENTICATION PROGRAM, AND INFORMATION PROCESSING DEVICE**

(71) Applicant: FUJITSU LIMITED, Kawasaki-shi, Kanagawa 211-8588 (JP)
(72) Inventor: AOKI, Takahiro, Kawasaki-shi, Kanagawa 211-8588 (JP)
(74) Representative: Hoffmann Eitle
(86) International application number: PCT/JP2020/019123
(87) International publication number: WO 2021/229725

(57) **Abstract**

An authentication method including: determining whether biometric information with a degree of similarity to first biometric information that satisfies a criterion is included in a plurality of pieces of biometric information extracted from a first biometric information group; and controlling, when the biometric information is determined not to be included, whether to execute first determination that determines whether biometric information with the degree of similarity to biometric information newly detected by the first sensor that satisfies the criterion is included in the plurality of pieces of biometric information extracted from the first biometric information group on a basis of a degree of divergence of the degree of similarity from the criterion, or to execute second determination that extracts a plurality of pieces of biometric information from a second biometric information group.

## Description

### FIELD

The present case relates to an authentication method, an authentication program, and an information processing apparatus.

### BACKGROUND

There has been disclosed a biometric authentication technique of narrowing down candidates by authentication using first biometric information (e.g., facial features) and authenticating a person in question by authentication using second biometric information (e.g., palm venous features) (e.g., see Patent Document 1).

### SUMMARY

### TECHNICAL PROBLEM

In a case where the authentication of the person in question using the second biometric information fails, retrying the authentication using the first biometric information every time will increase the time required for the authentication of the person in question.

In one aspect, it is an object of the present invention to provide an authentication method, an authentication program, and an information processing apparatus capable of shortening an authentication time.

### SOLUTION TO PROBLEM

In one aspect, an authentication method causes a computer to execute a process including: determining whether or not biometric information having a degree of similarity to first biometric information satisfying a criterion is included in a plurality of pieces of biometric information extracted from a first biometric information group by comparing the plurality of pieces of biometric information included in the first biometric information group in a first registered biometric information group with the first biometric information detected by a first sensor; and controlling, in a case where the biometric information that satisfies the criterion is determined not to be included, whether to execute first determination that determines whether or not biometric information having the degree of similarity to biometric information newly detected by the first sensor satisfying the criterion is included in the plurality of pieces of biometric information extracted from the first biometric information group on the basis of a degree of divergence of the degree of similarity from the criterion, or to execute second determination that extracts a plurality of pieces of biometric information from a second biometric information group by comparing the plurality of pieces of biometric information included in the second biometric information group in the first registered biometric information group with the first biometric information and determines whether or not biometric information having the degree of similarity to the first biometric information satisfying the criterion is included in the plurality of pieces of biometric information extracted from the second biometric information group.

### ADVANTAGEOUS EFFECTS OF INVENTION

It becomes possible to shorten an authentication time.

### BRIEF DESCRIPTION OF DRAWINGS

FIG. 1 is a block diagram exemplifying an overall configuration of an information processing apparatus;
FIG. 2A is a diagram exemplifying registered information, FIG. 2B is a diagram exemplifying installation of a face sensor and a vein sensor, and FIG. 2C is a diagram exemplifying the order of individual processes of multi-biometric authentication;
FIG. 3 is a diagram exemplifying a retry candidate list;
FIG. 4A is a diagram exemplifying a common retry, and FIG. 4B is a diagram for explaining a retry according to an embodiment;
FIG. 5 is a flowchart illustrating an exemplary process of the information processing apparatus;
FIG. 6 is a flowchart illustrating an exemplary process of the information processing apparatus;
FIG. 7 is a diagram exemplifying an expansion of the retry candidate list;
FIG. 8 is a flowchart illustrating an exemplary process according to a second embodiment;
FIG. 9 is a flowchart illustrating an exemplary process according to a third embodiment; and
FIG. 10 is a block diagram exemplifying a hardware configuration of a facial authentication processing unit, a venous authentication processing unit, and a multi-authentication processing unit.

### DESCRIPTION OF EMBODIMENTS

Hereinafter, embodiments will be described with reference to the drawings.

### [First Embodiment]

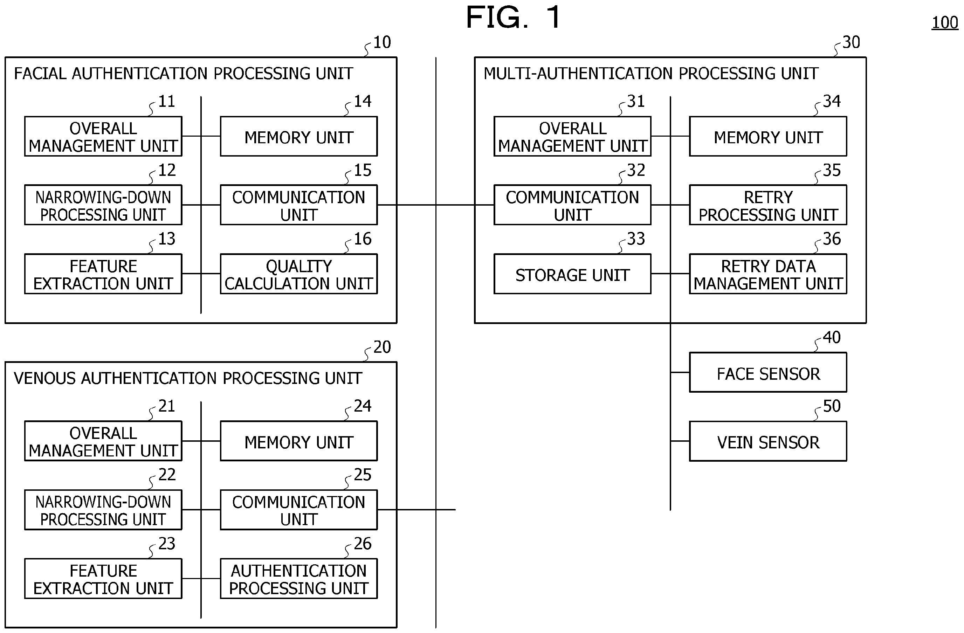

FIG. 1 is a block diagram exemplifying an overall configuration of an information processing apparatus 100. As exemplified in FIG. 1, the information processing apparatus 100 includes a facial authentication processing unit 10, a venous authentication processing unit 20, a multi-authentication processing unit 30, a face sensor 40, a vein sensor 50, and the like. The facial authentication processing unit 10 includes an overall management unit 11, a narrowing-down processing unit 12, a feature extraction unit 13, a memory unit 14, a communication unit 15, a quality calculation unit 16, and the like. The venous authentication processing unit 20 includes an overall management unit 21, a narrowing-down processing unit 22, a feature extraction unit 23, a memory unit 24, a communication unit 25, an authentication processing unit 26, and the like. The multi-authentication processing unit 30 includes an overall management unit 31, a communication unit 32, a storage unit 33, a memory unit 34, a retry processing unit 35, a retry data management unit 36, and the like.

The communication unit 15, the communication unit 25, and the communication unit 32 exchange information with the facial authentication processing unit 10, the venous authentication processing unit 20, the multi-authentication processing unit 30, the face sensor 40, and the vein sensor 50. The overall management unit 11 controls operation of each unit of the facial authentication processing unit 10. The overall management unit 21 controls operation of each unit of the venous authentication processing unit 20. The overall management unit 31 controls operation of each unit of the multi-authentication processing unit 30. The facial authentication processing unit 10, the venous authentication processing unit 20, and the multi-authentication processing unit 30 may be configured by one server or the like, or may be configured by separate servers.

The face sensor 40 is a metal oxide semiconductor (MOS) sensor, a charged coupled device (CCD) sensor, or the like. The vein sensor 50 includes a MOS sensor, a CCD sensor, and the like, and may also include near-infrared illuminator and the like.

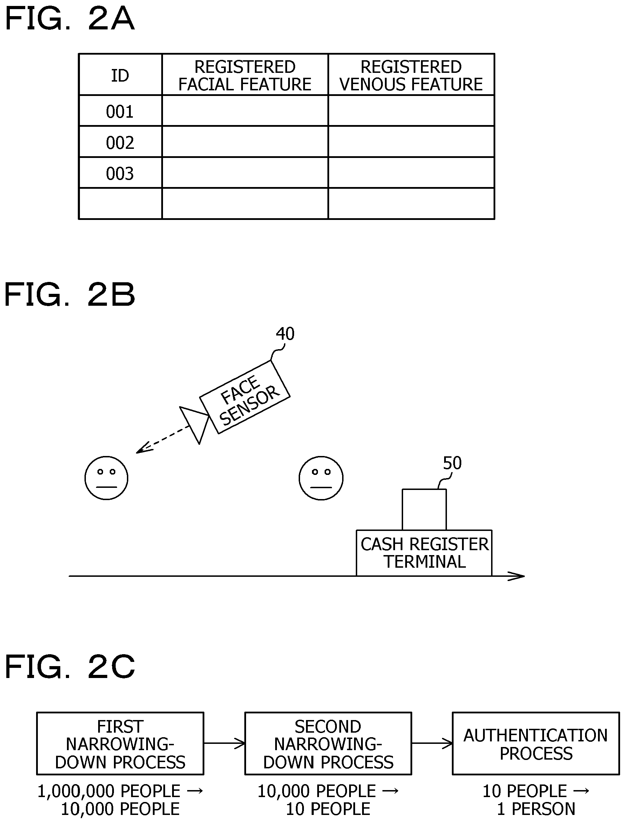

The storage unit 33 stores a plurality of types of biometric information of users registered in advance. Note that, in the present embodiment, two different types of modalities are used as the plurality of types of biometric information. The modality indicates a type of biometric features, such as a fingerprint, vein, iris, face shape, palm shape, and the like. Therefore, fingerprints and veins on the same finger are different modalities. In the present embodiment, as an example, facial features are stored as registered facial features in association with ID of each user, and venous features are further stored as registered venous features, as exemplified in FIG. 2A.

FIG. 2B is a diagram exemplifying installation of the face sensor 40 and the vein sensor 50. As exemplified in FIG. 2B, the face sensor 40 is a camera suspended from a ceiling of a store or the like. For example, a surveillance camera or the like that has already been installed in the store may be used as the face sensor 40. The face sensor 40 obtains a facial image of a user moving in the store. The vein sensor 50 is, for example, a camera installed at a cash register terminal in the store or the like. The vein sensor 50 obtains a palm image of the user at the cash register.

In the present embodiment, as an example, authentication candidates are narrowed down using facial images obtained by the face sensor 40. For example, the authentication candidates are narrowed down while the user is moving in the store and selecting products. Next, when the user brings the products to the cash register, the user is authenticated using a palm image obtained by the vein sensor 50. Credit card information and the like of the user are registered in advance together with the registered facial features and the registered venous features. Therefore, the payment is to be complete once the personal authentication succeeds. Hereinafter, details will be described.

### (First Narrowing-Down Process)

When the user enters an imaging area of the face sensor 40, the face sensor 40 obtains a plurality of facial images of the user. The memory unit 14 stores the plurality of facial images. The quality calculation unit 16 calculates quality such as a size of the face area, and image quality for the plurality of facial images. For example, the calculation is carried out such that a quality value increases as the size of the face area is larger and that the quality value increases as the image quality is higher. Furthermore, the memory unit 14 obtains the individual registered facial features from the storage unit 33, and stores them. The feature extraction unit 13 extracts the facial features of the facial image having the highest quality among the facial images stored in the memory unit 14 as facial features for verification. The facial features for verification used here are narrowing-down data with an emphasis on high-speed verification. The narrowing-down processing unit 12 collates the facial features for verification with the individual registered facial features, and obtains IDs associated with registered facial features with a degree of similarity (first narrowing-down score) to the facial features for verification equal to or higher than a threshold value. Through the process above, some of the IDs stored in the storage unit 33 may be narrowed down as a first candidate list for the person in question. A ratio of the number of candidates for the person in question to users to be processed is referred to as "narrowing-down rate". For example, in a case of selecting 10,000 candidates for the person in question from 1,000,000 users, the narrowing-down rate is 1% (= 10,000/1,000,000 = 0.01).

### (Second Narrowing-Down Process)

Next, when the user holds a hand over the vein sensor 50, the vein sensor 50 obtains a palm image of the user. The memory unit 24 stores the palm image. Furthermore, the memory unit 24 obtains, from the storage unit 33, the registered venous features associated with the IDs of the first candidate list for the person in question narrowed down by the narrowing-down processing unit 12, and stores them. The feature extraction unit 23 extracts venous features from the palm image stored in the memory unit 24 as venous features for verification. The venous features for verification used here are narrowing-down data with an emphasis on high-speed verification. The narrowing-down processing unit 22 collates the venous features for verification with the individual registered venous features, and obtains IDs associated with registered venous features with a degree of similarity (second narrowing-down score) to the venous features for verification equal to or higher than a threshold value. Through the process above, some of the IDs in the first candidate list for the person in question may be narrowed down as a second candidate list for the person in question. For example, with the narrowing-down rate of 0.1%, 10,000 candidates are narrowed down to approximately 10 candidates.

### (Authentication Process)

The authentication processing unit 26 collates the venous features for verification with the registered venous features associated with the IDs in the second candidate list for the person in question, and outputs information regarding authentication success when the degree of similarity (matching score) of one of the registered venous features with respect to the venous features for verification is equal to or higher than an identity determination threshold value. When the matching score is lower than the identity determination threshold value, the authentication processing unit 26 outputs information regarding authentication failure. Since it does not matter if the process takes time in the authentication process in this case, a method with high accuracy is used. For example, a method of performing authentication while correcting posture variation may be used. Alternatively, the feature extraction unit 23 may extract detailed venous features with larger data volume from the palm image to collate them with the registered venous features in the second candidate list for the person in question.

FIG. 2C is a diagram exemplifying the order of individual processes of the multi-biometric authentication above. As exemplified in FIG. 2C, first, the candidates for the person in question are narrowed down using the facial features in the first narrowing-down process. Next, the candidates for the person in question are further narrowed down using the venous features in the second narrowing-down process. Next, the person in question is authenticated using the venous features in the authentication process. According to the process described above, it becomes possible to shorten the authentication time up to the identity authentication as compared with a case where the authentication is performed only by venous authentication without narrowing down. Furthermore, since the candidates may be narrowed down in a relatively short time according to the first narrowing-down process and the second narrowing-down process, it becomes possible to spend time on the subsequent authentication process. Therefore, it becomes possible to improve the authentication accuracy by using a method with high accuracy for the authentication process.

However, the biometric authentication is not 100% reliable technology. Therefore, when the authentication fails, it is common to perform the authentication again (retry).

Meanwhile, it is desired that modalities are highly independent from each other to achieve highly accurate authentication by the multi-biometric authentication using a plurality of modalities. However, when it is attempted to use highly independent modalities, the optimum acquisition timing may significantly differ for each modality. For example, when it is attempted to use two types of highly independent modalities such as a face and a vein, the optimum acquisition timing may significantly differ. In such a case, there is a case where it is difficult to make a retry at a time of authentication failure.

For example, in a case where a surveillance camera or the like is used as the face sensor 40 as in the case exemplified in FIG. 2B, the installation location of the face sensor 40 and the installation location of the vein sensor 50 are usually separated. In this case, it is difficult to properly capture a facial image in front of the vein sensor 50 at which the user performs final authentication for the reason that, for example, the face may not be captured from the front. Therefore, a proper facial image may not be captured again when the authentication process fails, which makes it difficult to execute the retry process. The false rejection occurs with a fixed probability regardless of how high the accuracy of the biometric authentication is, it is desired that the authentication retry is executable even under such conditions.

Furthermore, it is desirable to execute the retry process itself at high speed. Examples of large-scale applications of ID-less biometric authentication include self-checkout, entry/exit gate security, and the like are.
In such an application scene, it is desired that a retry can be quickly made at a time of authentication failure. For example, in a case of using the multi-biometric authentication as gate security, the gate gets crowded with users when the retry takes a long time, which significantly reduces the convenience. A problem with a common retry process is that the process takes a long time as the narrowing-down process is re-executed from the beginning. In particular, in a case of applying deep learning to feature extraction, there is a problem that it takes to perform feature extraction for retry data.

In view of the above, the information processing apparatus 100 according to the present embodiment has a configuration capable of shortening the authentication time by shortening the time required for the retry.

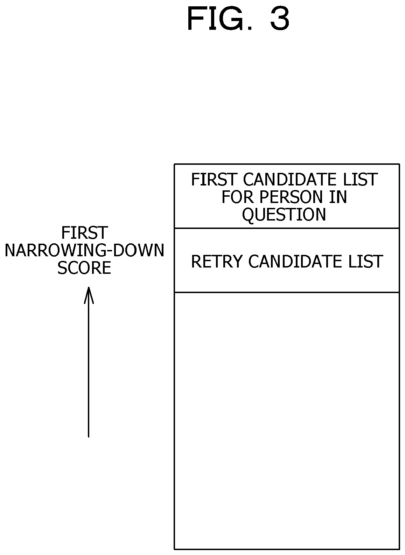

In the present embodiment, the retry processing unit 35 creates a retry candidate list, and stores it in the retry data management unit 36 during the first narrowing-down process. Specifically, the retry processing unit 35 creates the retry candidate list different from the first candidate list for the person in question. For example, as exemplified in FIG. 3, the retry processing unit 35 creates the retry candidate list from the top 1% to 2% when the first candidate list for the person in question is made up of the top 1% of the narrowing-down scores.

Furthermore, the retry processing unit 35 obtains retry facial images, and stores them in the retry data management unit 36 during the first narrowing-down process. For example, the retry processing unit 35 stores images with the second, third, etc. highest quality values in the retry data management unit 36 as the retry facial images. It is preferable to use, as the retry facial images, images that have high facial quality and are different from the image previously used for narrowing down. This is because it is difficult to succeed in the retry when similar images are used.

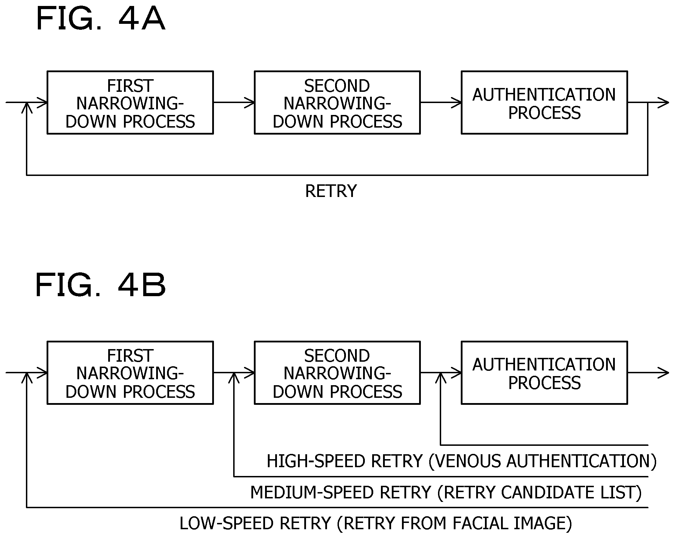

FIG. 4A is a diagram exemplifying a common retry. As exemplified in FIG. 4A, the first narrowing-down process, the second narrowing-down process, and the authentication process are performed in order. When the authentication process fails (when there is no registered venous feature whose matching score is equal to or higher than the identity determination threshold value), the process is executed again from the first narrowing-down process.

& is a diagram for explaining the retry according to the present embodiment. In the present embodiment, an appropriate retry start point is selected by referring to the matching score or the like at the time of the authentication process. For example, even in a case where the matching score at the time of the authentication process does not reach or exceed the identity determination threshold value, the matching score may be relatively high. In other words, even in a case where the matching score does not reach or exceed the identity determination threshold value, a degree of divergence between the matching score and the identity determination threshold value may be small. This is a case where the identity determination threshold value is nearly reached and the authentication process fails. In this case, it may be considered that the narrowing down of the candidates for the person in question has succeeded but the final authentication process has failed. In this case, it is sufficient if the narrowing down of the faces and veins is skipped and the authentication process is retried by obtaining the palm image again.

On the other hand, in a case where the matching score at the time of the authentication process is significantly low (less than the identity determination threshold value and the degree of divergence from the identity determination threshold value is large), it is highly likely that the candidate list for the person in question is incorrect. In this case, the authentication may succeed by making a retry from the second narrowing-down process or the first narrowing-down process. In this case, prepared retry data is used. First, the retry is made from the second narrowing-down process using the retry candidate list. This is because the feature extraction process takes time when the retry is made from the first narrowing-down process. In a case where the authentication does not succeed even with the use of the retry candidate list, it is highly likely that the used facial images are not appropriate in the first place. In this case, the retry is made from the first narrowing-down process using the retry facial images.

According to the present embodiment, it becomes possible to make a retry even in a case where it is difficult (or takes extremely long time) to obtain facial images again by preparing the retry data (retry candidate list for the person in question and retry facial images). Furthermore, it becomes possible to perform the multi-authentication retry by appropriately selecting the retry start point according to the matching score or the like. As described above, it becomes possible to shorten the time required for the retry, whereby it becomes possible to shorten the authentication time as a result.

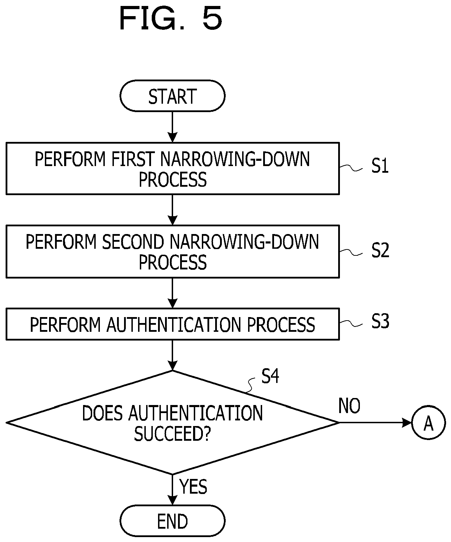

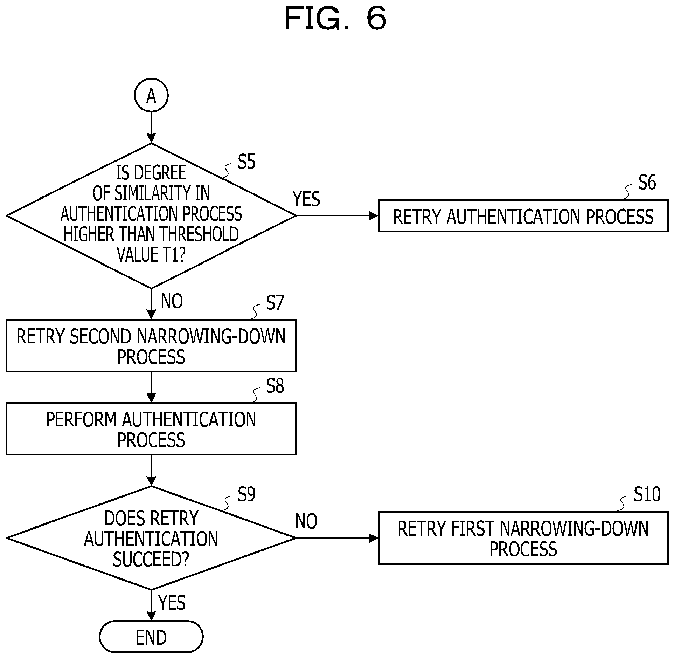

FIGs. 5 and 6 are flowcharts illustrating an exemplary process of the information processing apparatus 100. First, the narrowing-down processing unit 12 carries out the first narrowing-down process described above (step S1). In this case, the retry processing unit 35 creates a retry candidate list, obtains retry facial images, and stores them in the retry data management unit 36.

Next, the narrowing-down processing unit 22 carries out the second narrowing-down process described above (step S2). Next, the authentication processing unit 26 carries out the authentication process described above (step S3). Next, the authentication processing unit 26 determines whether or not the matching score of one of the registered venous features with the venous features for verification is equal to or higher than the identity determination threshold value, thereby determining whether or not the authentication has succeeded (step S4). If the determination in step S4 is "Yes", the authentication processing unit 26 outputs information regarding authentication success. Thereafter, the execution of the flowchart is terminated.

If the determination in step S4 is "No", the retry processing unit 35 determines whether or not the matching score at the time of the authentication process in step S3 is higher than a threshold value T1, which is lower than the identity determination threshold value (step S5). If the determination in step S5 is "Yes", the retry processing unit 35 instructs the authentication processing unit 26 to retry the authentication process for the second candidate list for the person in question created in step S2 (step S6). In this case, the process is executed again from step S3. In step S3 in this case, the vein sensor 50 newly obtains a palm image of the user.

If the determination in step S5 is "No", the retry processing unit 35 instructs the narrowing-down processing unit 22 to retry the second narrowing-down process for the retry candidate list stored in the retry data management unit 36 (step S7). Next, the authentication process described above is performed on the result of step S7 (step S8).

The retry processing unit 35 determines whether or not the result of the authentication process in step S8 is successful (step S9). If the determination in step S9 is "Yes", the retry processing unit 35 outputs information regarding authentication success. Thereafter, the execution of the flowchart is terminated. If the determination in step S9 is "No", the retry processing unit 35 instructs the narrowing-down processing unit 12 to retry the first narrowing-down process for the retry facial images stored in the retry data management unit 36 (step S10). In this case, the process is executed again from step S1.

In the present embodiment, the face sensor 40 is an example of a first sensor. The vein sensor 50 is an example of a second sensor. The facial features extracted by the face sensor 40 and the feature extraction unit 13 are an example of first biometric information. The registered venous features of the individual IDs stored in the storage unit 33 are an example of a first registered biometric information group. The registered venous features of the individual IDs in the first candidate list for the person in question are an example of a plurality of pieces of biometric information extracted from a first biometric information group by comparing a plurality of pieces of biometric information included in the first biometric information group of the first registered biometric information group with the first biometric information detected by the first sensor. The authentication processing unit 26 is an example of a determination unit that determines whether or not biometric information whose degree of similarity to the first biometric information satisfies a criterion is included in the plurality of pieces of biometric information extracted from the first biometric information group on the basis of the comparison between the plurality of pieces of biometric information included in the first biometric information group of the first registered biometric information group with the first biometric information detected by the first sensor. The retry processing unit 35 is an example of a control unit that controls whether to execute first determination that determines whether or not biometric information whose degree of similarity to biometric information newly detected by the first sensor satisfies a criterion is included in the plurality of pieces of biometric information extracted from the first biometric information group on the basis of a degree of divergence from the criterion for the degree of similarity or to execute second determination that extracts a plurality of pieces of biometric information from a second biometric information group by comparing a plurality of pieces of biometric information included in the second biometric information group of the first registered biometric information group with the first biometric information and determines whether or not biometric information whose degree of similarity to the first biometric information satisfies the criterion is included in the plurality of pieces of biometric information extracted from the second biometric information group. The narrowing-down processing unit 12 is an example of a processing unit that extracts the first biometric information group from the first registered biometric information group and also extracts the second biometric information group by comparing second biometric information detected by the second sensor with a plurality of pieces of biometric information included in a second registered biometric information group of other pieces of biometric information associated with individual pieces of biometric information included in the first registered biometric information group.

### [Second Embodiment]

A first narrowing-down process may take time. For example, a function of a facial authentication processing unit 10 may be executed in another terminal, which may cause a large network delay or the like. In such a case, a request for the first narrowing-down process may be transmitted in advance when authentication fails in an authentication process, and may be executed in parallel with another process. This makes it possible to shorten the total processing time.

Furthermore, in a case of gate security or the like, users try to pass through the gate one after another. In this case, at a time of making a retry for a certain user, the authentication process for the next user may start. In this case, the retry process for the prior user may be prioritized and executed. This is because there is usually no point in authenticating the next user unless the prior user is successfully authenticated. Accordingly, the total processing time may be shortened by preferentially executing the retry process.

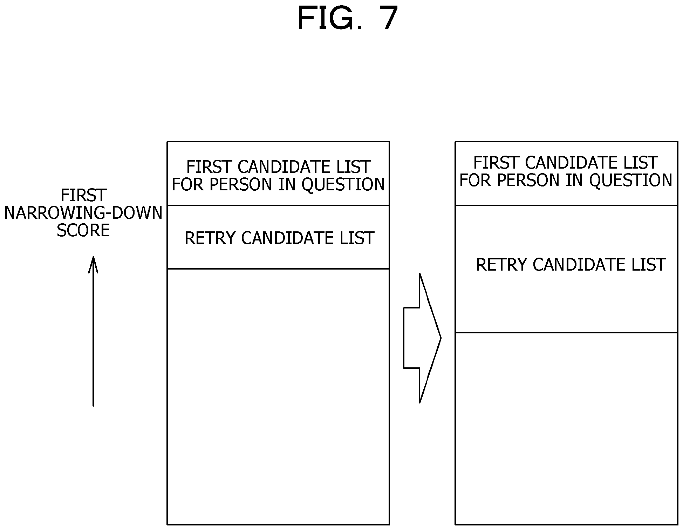

The time required for the retry is determined depending on a system configuration (processing performance, network bandwidth, etc.). Accordingly, a narrowing-down rate in a retry of a second narrowing-down process may be dynamically changed depending on the time required for the retry of the first narrowing-down process or the like. For example, as exemplified in FIG. 7, the top 1% to 2% of first narrowing-down scores in the first narrowing-down process are set as retry candidates, and the retry process starts from the second narrowing-down process under normal settings. Here, in a case where the retry process from facial feature extraction is slow, the range of the retry candidate list may be expanded (e.g., 1% to 3%) and may execute the retry from venous narrowing down.

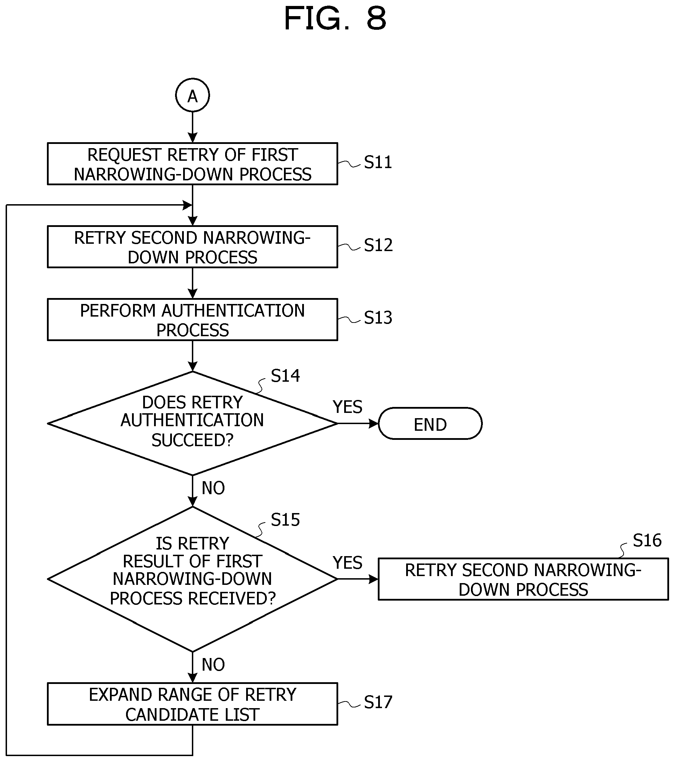

FIG. 8 is a flowchart illustrating an exemplary process according to a second embodiment. First, a process similar to that of the flowchart of FIG. 5 is performed (steps S1 to S4). If the determination in step S4 is "No", a retry processing unit 35 requests a narrowing-down processing unit 12 to retry the first narrowing-down process for retry facial images stored in a retry data management unit 36 (step S11). Next, the retry processing unit 35 instructs a narrowing-down processing unit 22 to retry the second narrowing-down process for a retry candidate list stored in the retry data management unit 36 (step S12). Next, an authentication processing unit 26 executes the authentication process described above on the result of step S12 (step S13).

The retry processing unit 35 determines whether or not the result of the authentication process in step S13 is successful (step S14). If the determination in step S14 is "Yes", the retry processing unit 35 outputs information regarding authentication success. Thereafter, the execution of the flowchart is terminated. If the determination in step S14 is "No", the retry processing unit 35 determines whether or not the retry result of the first narrowing-down process requested in step S11 has been received (step S15). In other words, it is determined whether or not the retry of the first narrowing-down process requested in step S11 has been complete.

If the determination in step S15 is "Yes", the retry processing unit 35 instructs the narrowing-down processing unit 22 to retry the second narrowing-down process for the retry candidate list stored in the retry data management unit 36 (step S16). In this case, the process is executed again from step S2. If the determination in step S15 is "No", the retry processing unit 35 instructs the first narrowing-down processing unit 12 to expand the range of the retry candidate list (step S17). Thereafter, the process is executed again from step S12.

According to the present embodiment, the range of the retry candidate list is expanded, and the second narrowing-down process in step S12 is repeated until the determination in step S15 becomes "Yes". In this case, the time required for the second narrowing-down process increases. However, when the first narrowing-down process takes time, the retry authentication may succeed during the execution of the first narrowing-down process, which shortens the total processing time.

In the present embodiment, the retry candidate list expanded in step S17 is an example of third biometric information group including the number of pieces of biometric information larger than the number of pieces of biometric information of a second biometric information group in first registered biometric information group.

### [Third Embodiment]

In the first embodiment, a matching score is used as an index for determining a retry start point. In the second embodiment, the retry start point is not limited to this, and is determined on the basis of a combination the matching score and a first narrowing-down score.

For example, it is assumed that authentication fails as a result of performing an authentication process using the top 1% of first narrowing-down scores in a first narrowing-down process as candidates for a person in question. At this time, when the first narrowing-down scores are low as a whole (when the average value of the first narrowing-down scores is lower than a predetermined threshold value), the first narrowing-down process using facial images may have failed. Accordingly, in this case, the process directly transitions to a retry using the facial images (retry from the first narrowing-down process).

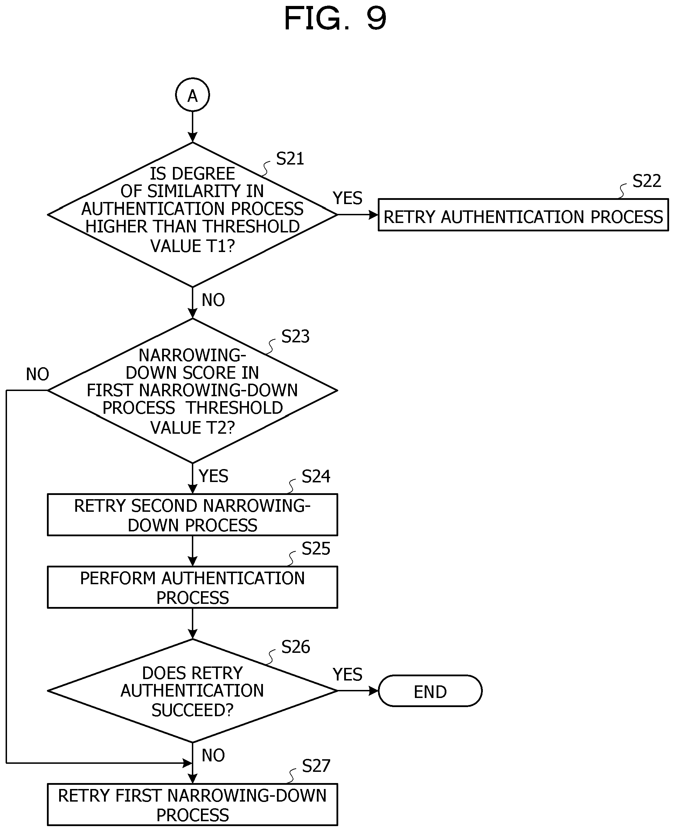

FIG. 9 is a flowchart illustrating an exemplary process according to a third embodiment. First, a process similar to that of the flowchart of FIG. 5 is performed (steps S1 to S4). If the determination in step S4 is "No", a retry processing unit 35 determines whether or not the matching score at the time of the authentication process in step S3 is higher than a threshold value T1, which is lower than an identity determination threshold value (step S21). If the determination in step S21 is "Yes", the retry processing unit 35 instructs an authentication processing unit 26 to retry the authentication process for a second candidate list for a person in question created in step S2 (step S22). In this case, the process is executed again from step S3. In step S3 in this case, a vein sensor 50 newly obtains a palm image of a user.

If the determination in step S21 is "No", the retry processing unit 35 determines whether or not the average value of the first narrowing-down score in the first narrowing-down process is higher than a threshold value T2 (step S23). If the determination in step S23 is "Yes", the retry processing unit 35 instructs a narrowing-down processing unit 22 to retry a second narrowing-down process for a retry candidate list stored in a retry data management unit 36 (step S24). Next, the authentication process described above is performed on the result of step S24 (step S25).

The retry processing unit 35 determines whether or not the result of the authentication process in step S25 is successful (step S26). If the determination in step S26 is "Yes", the retry processing unit 35 outputs information regarding authentication success. Thereafter, the execution of the flowchart is terminated. If the determination in step S26 is "No", the retry processing unit 35 instructs a narrowing-down processing unit 12 to retry the first narrowing-down process for retry facial images stored in the retry data management unit 36 (step S27). In this case, the process is executed again from step S1.

Step S27 is also executed in the case where the determination in step S23 is "No".

According to the present embodiment, the process directly transitions to a retry from the first narrowing-down process when it is estimated that the first narrowing-down process has failed. In this case, execution of needless processes is omitted, and as a result, it becomes possible to shorten the time required for the retry, and to shorten the authentication time.

Note that, while the first candidate list for the person in question and the retry candidate list do not overlap each other in each of the embodiments described above, it is not limited to this. For example, the retry candidate list may be created by using facial features different from the facial features used at the time of creating the first candidate list for the person in question. For example, it is assumed that different parts or the like of a face shape are used, or the like. In this case, the first candidate list for the person in question and the retry candidate list may partially overlap each other.

### (Hardware Configuration)

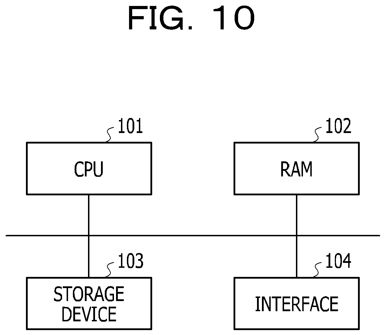

FIG. 10 is a block diagram exemplifying a hardware configuration of the facial authentication processing unit 10, the venous authentication processing unit 20, and the multi-authentication processing unit 30 of the information processing apparatus 100. As exemplified in FIG. 10, the information processing apparatus 100 includes a central processing unit (CPU) 101, a random access memory (RAM) 102, a storage device 103, an interface 104, and the like.

The central processing unit (CPU) 101 serves as a central processing unit. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. For example, a read only memory (ROM), a solid state drive (SSD) such as a flash memory, a hard disk to be driven by a hard disk drive, or the like may be used as the storage device 103. The storage device 103 stores an authentication program. The interface 104 is an interface device with an external device. The facial authentication processing unit 10, the venous authentication processing unit 20, and the multi-authentication processing unit 30 of the information processing apparatus 100 are implemented by the CPU 101 executing the authentication program. Note that hardware such as a dedicated circuit may be used as the facial authentication processing unit 10, the venous authentication processing unit 20, and the multi-authentication processing unit 30.

While the embodiments of the present invention have been described above in detail, the present invention is not limited to such specific embodiments, and various modifications and alterations may be made within the scope of the present invention described in the claims.

### CITATION LIST

### PATENT DOCUMENT

Patent Document 1: Japanese Laid-open Patent Publication No. 2019-128880

### REFERENCE SIGNS LIST

10 Facial authentication processing unit
11 Overall management unit
12 Narrowing-down processing unit
13 Feature extraction unit
14 Memory unit
15 Communication unit
16 Quality calculation unit
20 Venous authentication processing unit
21 Overall management unit
22 Narrowing-down processing unit
23 Feature extraction unit
24 Memory unit
25 Communication unit
26 Authentication processing unit
30 Multi-authentication processing unit
31 Overall management unit
32 Communication unit
33 Storage unit
34 Memory unit
35 Retry processing unit
36 Retry data management unit
40 Face sensor
50 Vein sensor
100 Information processing apparatus

## Claims

1. An authentication method implemented by a computer, the authentication method comprising:
determining whether or not biometric information with a degree of similarity to first biometric information that satisfies a criterion is included in a plurality of pieces of biometric information extracted from a first biometric information group by comparing the plurality of pieces of biometric information included in the first biometric information group in a first registered biometric information group with the first biometric information detected by a first sensor; and
controlling, in a case where the biometric information that satisfies the criterion is determined not to be included, whether to execute first determination that determines whether or not biometric information with the degree of similarity to biometric information newly detected by the first sensor that satisfies the criterion is included in the plurality of pieces of biometric information extracted from the first biometric information group on a basis of a degree of divergence of the degree of similarity from the criterion, or to execute second determination that extracts a plurality of pieces of biometric information from a second biometric information group by comparing the plurality of pieces of biometric information included in the second biometric information group in the first registered biometric information group with the first biometric information and determines whether or not biometric information with the degree of similarity to the first biometric information that satisfies the criterion is included in the plurality of pieces of biometric information extracted from the second biometric information group.

2. The authentication method according to claim 1, the method further comprising:
extracting the first biometric information group from the first registered biometric information group and also extracting the second biometric information group by comparing second biometric information detected by a second sensor with a plurality of pieces of biometric information included in a second registered biometric information group of other pieces of biometric information associated with the individual pieces of biometric information included in the first registered biometric information group.

3. The authentication method according to claim 2, the method further comprising: controlling whether or not to execute the second determination according to a comparison result between the second biometric information and the plurality of pieces of biometric information included in the second registered biometric information group.

4. The authentication method according to any one of claims 1 to 3, the method further comprising executing third determination processing that includes:
extracting, when the second determination is executed, a plurality of pieces of biometric information from a third biometric information group by comparing the plurality of pieces of biometric information included in the third biometric information group that includes a number of the pieces of biometric information larger than a number of the pieces of biometric information in the second biometric information group in the first registered biometric information group with the first biometric information in a case where the biometric information with the degree of similarity to the first biometric information that satisfies the criterion is not included in the plurality of pieces of biometric information extracted from the second biometric information group; and
determining whether or not biometric information with the degree of similarity to the first biometric information that satisfies the criterion is included in the plurality of pieces of biometric information extracted from the third biometric information group.

5. The authentication method according to claim 4, wherein
comparison between new biometric information detected by the second sensor and the plurality of pieces of biometric information included in the second registered biometric information group starts when the biometric information with the degree of similarity to the first biometric information that satisfies the criterion is not included in the plurality of pieces of biometric information extracted from the first biometric information group, and
the executing of the third determination processing ends when the comparison ends.

6. The authentication method according to any one of claims 1 to 5, wherein
the first biometric information includes a venous feature, and
the second biometric information includes a facial feature.

7. An information processing apparatus comprising:
a determination unit of determining whether or not biometric information with a degree of similarity to first biometric information that satisfies a criterion is included in a plurality of pieces of biometric information extracted from a first biometric information group by comparing the plurality of pieces of biometric information included in the first biometric information group in a first registered biometric information group with the first biometric information detected by a first sensor; and
a control unit of controlling, in a case where the biometric information that satisfies the criterion is determined not to be included, whether to execute first determination that determines whether or not biometric information with the degree of similarity to biometric information newly detected by the first sensor that satisfies the criterion is included in the plurality of pieces of biometric information extracted from the first biometric information group on a basis of a degree of divergence of the degree of similarity from the criterion, or to execute second determination that extracts a plurality of pieces of biometric information from a second biometric information group by comparing the plurality of pieces of biometric information included in the second biometric information group in the first registered biometric information group with the first biometric information and determines whether or not biometric information with the degree of similarity to the first biometric information that satisfies the criterion is included in the plurality of pieces of biometric information extracted from the second biometric information group.

8. The information processing apparatus according to claim 7, the apparatus further comprising:
a processing unit of extracting the first biometric information group from the first registered biometric information group and also extracting the second biometric information group by comparing second biometric information detected by a second sensor with a plurality of pieces of biometric information included in a second registered biometric information group of other pieces of biometric information associated with the individual pieces of biometric information included in the first registered biometric information group.

9. The information processing apparatus according to claim 8, wherein the control unit controls whether or not to execute the second determination according to a comparison result between the second biometric information and the plurality of pieces of biometric information included in the second registered biometric information group.

10. The information processing apparatus according to any one of claims 7 to 9, wherein the control unit executes third determination processing that includes:
extracting, when the second determination is executed, a plurality of pieces of biometric information from a third biometric information group by comparing the plurality of pieces of biometric information included in the third biometric information group that includes a number of the pieces of biometric information larger than a number of the pieces of biometric information in the second biometric information group in the first registered biometric information group with the first biometric information in a case where the biometric information with the degree of similarity to the first biometric information that satisfies the criterion is not included in the plurality of pieces of biometric information extracted from the second biometric information group; and
determining whether or not biometric information with the degree of similarity to the first biometric information that satisfies the criterion is included in the plurality of pieces of biometric information extracted from the third biometric information group.

11. The information processing apparatus according to claim 10, wherein
the control unit starts, in a case where the biometric information with the degree of similarity to the first biometric information that satisfies the criterion is not included in the plurality of pieces of biometric information extracted from the first biometric information group, comparison between new biometric information detected by the second sensor and the plurality of pieces of biometric information included in the second registered biometric information group, and
the control unit stops, in a case where the comparison ends, the executing of the third determination processing.

12. The information processing apparatus according to any one of claims 7 to 11, wherein
the first biometric information includes a venous feature, and
the second biometric information includes a facial feature.

13. An authentication program comprising instructions which, when executed by a computer, cause the computer to perform processing, the processing comprising:
determining whether or not biometric information with a degree of similarity to first biometric information that satisfies a criterion is included in a plurality of pieces of biometric information extracted from a first biometric information group by comparing the plurality of pieces of biometric information included in the first biometric information group in a first registered biometric information group with the first biometric information detected by a first sensor; and
controlling, in a case where the biometric information that satisfies the criterion is determined not to be included, whether to execute first determination that determines whether or not biometric information with the degree of similarity to biometric information newly detected by the first sensor that satisfies the criterion is included in the plurality of pieces of biometric information extracted from the first biometric information group on a basis of a degree of divergence of the degree of similarity from the criterion, or to execute second determination that extracts a plurality of pieces of biometric information from a second biometric information group by comparing the plurality of pieces of biometric information included in the second biometric information group in the first registered biometric information group with the first biometric information and determines whether or not biometric information with the degree of similarity to the first biometric information that satisfies the criterion is included in the plurality of pieces of biometric information extracted from the second biometric information group.

14. The authentication program according to claim 13, the processing further comprising:
extracting the first biometric information group from the first registered biometric information group and also extracting the second biometric information group by comparing second biometric information detected by a second sensor with a plurality of pieces of biometric information included in a second registered biometric information group of other pieces of biometric information associated with the individual pieces of biometric information included in the first registered biometric information group.

15. The authentication program according to claim 14, the processing further comprising: controlling whether or not to execute the second determination according to a comparison result between the second biometric information and the plurality of pieces of biometric information included in the second registered biometric information group.

16. The authentication program according to any one of claims 13 to 15, the method further comprising executing third determination processing that includes:
extracting, when the second determination is executed, a plurality of pieces of biometric information from a third biometric information group by comparing the plurality of pieces of biometric information included in the third biometric information group that includes a number of the pieces of biometric information larger than a number of the pieces of biometric information in the second biometric information group in the first registered biometric information group with the first biometric information in a case where the biometric information with the degree of similarity to the first biometric information that satisfies the criterion is not included in the plurality of pieces of biometric information extracted from the second biometric information group; and
determining whether or not biometric information with the degree of similarity to the first biometric information that satisfies the criterion is included in the plurality of pieces of biometric information extracted from the third biometric information group.

17. The authentication program according to claim 16, wherein
comparison between new biometric information detected by the second sensor and the plurality of pieces of biometric information included in the second registered biometric information group starts when the biometric information with the degree of similarity to the first biometric information that satisfies the criterion is not included in the plurality of pieces of biometric information extracted from the first biometric information group, and
the executing of the third determination processing ends when the comparison ends.

18. The authentication program according to any one of claims 13 to 17, wherein
the first biometric information includes a venous feature, and
the second biometric information includes a facial feature.
